# EUROPEAN PATENT APPLICATION

(11) **EP 2 682 667 A2**
(43) Date of publication of application: **08.01.2014**
(21) Application number: 12179798.9
(22) Date of filing: 09.08.2012
(51) Int. Cl.: F17C 13/08

(54) **A pressurized gas cylinders pallet**

(30) Priority: 04.07.2012 IN DE20792012
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Binoist, Manuel, 110 011 New Delhi (IN); Sanglan, Patrick, 38180 Seyssins (FR); Kulshreshtha, Sachin, 110 011 New Delhi (IN)
(74) Representative: De Cuenca, Emmanuel Jaime

(57) **Abstract**

A pallet for transporting a group of pressurized gas cylinders (18) comprising a supporting base (9), four side walls (2) and a roof (1) defining an enclosure around the cylinders (18), characterized in that each wall (2) comprises an full structure extending from a first upper extremity adjacent to the roof (1) to a second lower extremity situated above the supporting base (9) so that the enclosure is opened at the bottom of the cylinders (18), the roof (1) comprising a mesh like structure, the pallet comprising a common tap (4) connected to a conduit (14) selectively connected to the cylinders (18), one of the side walls (2) comprising an aperture (3) giving access to the common tap (4), the supporting base (9) and the upper part of the pallet situated underneath the roof (1) comprising each several openings (10) for receiving the tines of a fork truck or pallet loader/unloader.

## Description

The invention concerns a pallet for pressurized gas cylinders.

The invention relates more particularly to a pallet for transporting a group of pressurized gas cylinders comprising a supporting base, four side walls and a roof defining an enclosure around the cylinders.

In countries where power grids are of poor quality, telecommunication sites are generally buffered by batteries and Diesel generators to maintain the quality of services provided to mobile users of telecommunication networks. In the event of main grid failure, the batteries take over until the generator starts for providing a continuous power supply. If the generator also faces a problem, the remaining power left in the batteries is used to power the main utilities until the intervention of a site technician or network feedback.

Two types of architectures are standardized for telecommunications facilities. A first type "Indoor" or "ID sites" has its equipments installed in a shelter protected from weather and external attacks. These shelters are equipped with air conditioners to keep inside a controlled temperature ensuring proper functioning and longevity to the equipments. The standard air conditioners are powered by alternating current and, when the main power grid fails, air conditioning unit stops. Air conditioning restarts when the diesel generator starts up. The battery provides continuous supply to the telecom equipments till the period Diesel generator starts in operation.

The second type "Outdoor' or 'OD sites', has its equipment installed outdoors or in ventilated cabinets. They have the latest equipments, including an extended temperature range that avoids the use of air conditioners.

In a context where telecom operators are increasingly concerned about their energy bills and CO2 footprint, the new sites will benefit from extensive works to reduce the energy consumption of the installation.

For existing sites, the most immediate measure to reduce emissions is to replace the back-up Diesel generator by a fuel cell.

The fuel cells are basically fed with hydrogen gas as a feedstock with authorized numbers of hydrogen (H2) cylinders assembled in sixteen and eight cylinders combination which is called a hydrogen pallet.

According to local rules, generally, a maximum number of twenty five hydrogen gas cylinders can be stored at a single site. This limit may vary from one country to another one.

Typical fuel cell installations include a fuel cell housed in a cabinet, two or more hydrogen pallets, a gas regulation and automatic changer-over device enabling to distribute the hydrogen flow from its storage pressure into the cylinders down to the pressure and flow required by the fuel cell. The installations comprise also safety devices including a vent mast to collect and release hydrogen leaks and venting at a height defined to avoid any exposure of people and equipment in the vicinity of the installation, a protection enclosure consisting in, generally, a metallic mesh and installed to avoid people to penetrate the enclosure.

In addition to the typical footprint of the pallets, an additional area with strengthened safety of two meters all around the pallets is required inside which no permanent activities of any kind are allowed. A typical Diesel generator has a reduced footprint.

The penetration of the fuel cell and hydrogen technology will accelerate providing that the constraints and requirements for deploying are equivalent to the ones for existing technologies.

For installation, operation and transportation of hydrogen pallets on the sites, several factors are important and need to be considered. Examples of possible factors are:
- the truck payload capacity for transporting the pallets
- the structure of the base for supporting fuel cell assembly and hydrogen pallets;
- the hydrogen pallets lifting pay-loader machines for loading and unloading on to the sites;
- the hydrogen consumption pattern for refilling of hydrogen gas at sites which will be helpful in guiding supply chain activities;
- personnel and site safety during operation and transportation.

Typical installations comprise two pallets of eight to sixteen hydrogen cylinders pressurized up to 200bar enclosed in a protective enclosure and placed on a supporting structure.

The existing solutions using eight and sixteen cylinder pallets suffer from drawbacks and weaknesses. Possible examples of drawbacks or weakness may comprise at least one among the followings.
- Existing systems do not have any reliable protection for cylinder manifold from human approach which might be a dangerous situation such as in case of hydrogen leak.
- Existing systems do not offer protection against damage to the adjacent equipments.
- Existing systems have cylinder valves on each cylinder for isolation and opening up the cylinder gas to feed to the fuel cell system. This means that each time to make hydrogen pallet system into line and off-line, the site technician needs to open and close all valves which is a time consuming activity. Moreover, more valves means more numbers of bolted connections which means more risks of leaks with more number of leak points. More number of valves calls for more manual handling which may results in accidents due to errors.
- Different sizes of cylinder pallets require more inventories at the warehouse which increases the costs.
- Existing systems do not have any human protection from jet fire during hydrogen leak from the cylinder valve and its manifold.
- Non-uniform sizes of cylinder pallets require different designed supporting platform frames.
- Non-uniform sizes (weights) of cylinder pallets require higher payload capacity machine (forklift / tractor).
- Non-uniform sizes of cylinder pallets result in ineffective utilization of space on the truck which yields to poor payload allocation on the truck and increase in the operating fuel cost of the truck.
- Existing systems do not provide good access for holding the pallet. Bottom lifting poses a threat of chances to topple up the forklift / tractor along with pallet during its movement due to its low point of center of gravity.
- Existing systems can be damaged in case of falling of any big stone from top (either intentionally or not). In addition, in many countries like India, Malaysia, Australia... during festive seasons, there are risks that fire crackers drop on cylinder valves manifold which might create a dangerous situations in case of any flammable gas leak.
- Non-uniform sizes of cylinder pallets pose problems for analyzing the site consumption data and results in more residual pressure loss in the cylinders which will increase the operating cost of pallets change over at site.
- Non-uniform sizes of cylinder pallets require manufacturers to put extra efforts and time to manufacture two different sizes of cylinder pallets.
- Existing systems pose a threat of breakup of connection point of flexible hose to the cylinder valve manifold during a sudden unloading of the pallet by a crane or a forklift,
- to cope with the safety requirements, an installation is required to housed the pallets with additional costs and installation time and efforts,
- the area required for deploying such a combination of pallets and installation is prohibitive when compared with Diesel generator installation footprints.

It is an object of the present invention to remedy fully or partly to at least one of the drawbacks listed above.

In order to do this, the pallet according to the invention, in other respects in accordance with the generic definition thereof given in the above preamble, is essentially **characterized in that** each wall comprises an full structure extending from a first upper extremity adjacent to the roof to a second lower extremity situated above the supporting base so that the enclosure is opened at the bottom of the cylinders, the roof comprising a mesh like structure, the pallet comprising a common tap connected to a conduit selectively connected to the cylinders, one of the side walls comprising an aperture giving access to the common tap, the supporting base and the upper part of the pallet situated underneath the roof comprising each several openings for receiving the tines of a fork truck or pallet loader/unloader.

Furthermore, the embodiments might comprise one or more of the following features:
- the pallet comprises at least an attaching organ such as a hook, selectively attachable to attaching part of the pallet for selectively locking the pallet to a distinct support frame and preventing the unloading of the pallet when it is in operation,
- the roof is made of wire netting comprising openings having each dimensions between 0,002m² and 0,200m² and preferably between 0,005m² and 0,150m²
- at least part the side walls are made of metal sheet panel having a thickness between 0,5mm and 2.5mm,
- the height opening at the bottom of the side walls is comprised between 5cm and 20cm,
- the aperture has a surface comprised between 0, 01 m² and 0,05m²,
- the pallet comprises a lifting ring located at the top of the pallet,
- the pallet encloses between six to eighteen gas cylinders,
- the pallet comprises a separating plate situated inside the enclosure, the separating plate comprising several holes for receiving respectively the upper part of the cylinders, a space being provided between at least part of the peripheral edge of the separating plate and the walls so that the separating plate preventing an upper gas leak to mitigate downward in the enclosure and permitting a gas leak at the bottom escaping to the top via the space between the separating plate and the walls,
- the separating plate is perpendicular to the walls and at least part of the peripheral edge of the separating plate is curved or bent upwardly,
- the necks of cylinders are fastened into the respective holes of the separating plate,
- the necks of cylinders are fastened into the respective holes by means a threaded nut like organ,
- at least part of the surface of the walls facing the peripheral edge of the separating plate is curved or bent upwardly so that it cooperates with the peripheral edge of the separating plate for defining a guiding divergent path for the gas from the bottom to the top (i.e. a guiding path forcing the gas coming from the central area of the enclosure to flow upwardly toward the walls),
- at least part of side walls are made of two or more separate panels and preferably an upper panel and a lower panel attached one to the other,
- the pallet comprises a framed comprising bars, the upper panels being secured to the bars by means of attaching organs such as threaded bolts screwed into threaded holes the bars,
- bottom edge of upper panels are received into supporting slit located at upper edge of bottom panels, the lower panels being secured to the bars frame by means of attaching organs such as threaded bolts screwed into threaded holes the bars,
- the pallet comprises mobile flaps for selectively closing the openings for receiving the tines of a fork truck or pallet loader/unloader,
- the flaps being articulated on a hinge and urged in their closing position of the openings by means of a return organ such as a spring, the entrance of the tines of a fork truck or pallet loader/unloader into the openings pushing the flaps toward their open position against the return organ effort,
- the pallet comprises openings situated in the same plane at opposite faces of the pallet, each opening comprising a closing flap, the flaps of the opposite openings are mechanically linked so that the opening of the flap on one side urges the openings of the flap of the other side.

The invention might also concern every alternative device or process comprising any combination based on the above or below described features wherein:

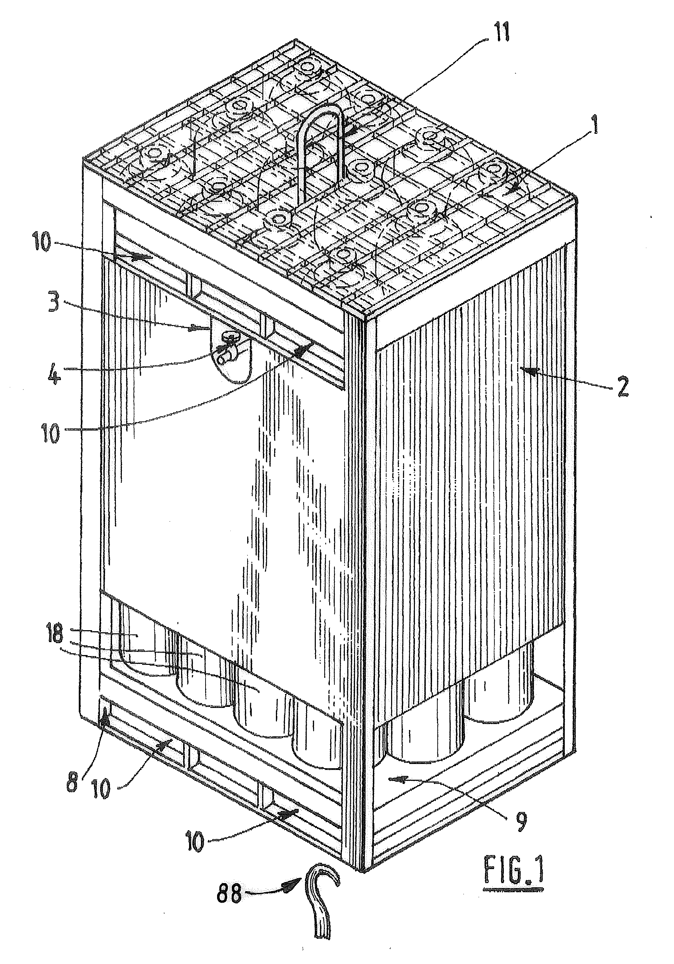

- figure 1 depicts a perspective view of a possible example of a pallet according to the invention,

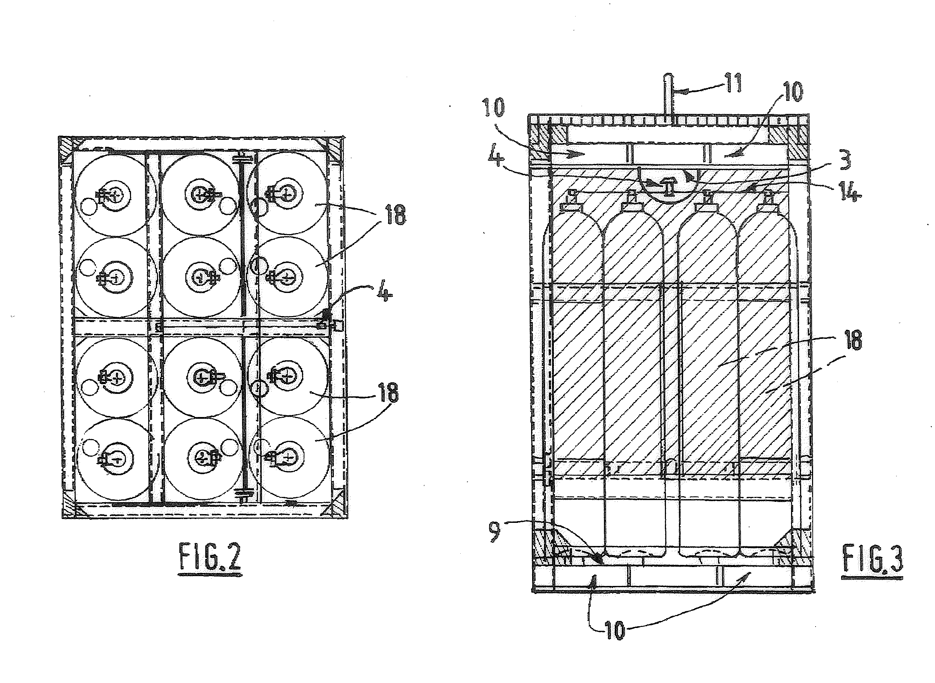

- figure 2 depicts a top view of the pallet of figure 1,
- figure 3 depicts a front view of the pallet of figure 1,
- figure 4 depicts a schematic and partial side view of the pallet according to another preferred embodiment comprising a separating plate,
- figure 5 depicts a schematic and partial view from above of the separating plate of figure 4,
- figure 6 depicts schematically twice a enlarged portion of figure 4 for illustrating flows of gas in case of leaks in the enclosure,
- figure 7 depicts a schematic and partial cut view showing a possible fastening between the separating plate 2 and a cylinder,
- figure 8 depicts a schematic partial perspective view of a detail of the pallet illustrating the structure of two panels forming the side walls,
- figure 9 depicts a schematic partial lateral view of a detail of the pallet illustrating the internal mechanism of closing flaps of the openings for forklift in the closed position,
- figure 10 is similar to figure 9, the closing flaps being in an open position.

The pallet shown at the figures comprises, at its bottom, a supporting base 9. The pallet comprises four side walls 2 extending from the base 9 to a closing upper roof 1. The base 9, walls 2 and roof 1 define a closed volume around the cylinders 18. In this example the pallet contains six pairs of cylinders having a volume of fifty liters each. But similar concept including all the claimed features is suitable for pallets which number and size of cylinders is adjusted to respect the regulations in force in the countries. It is also compatible with any type of cylinders steel aluminium, composite, whatever the cylinders pressure.

Each wall 2 comprises a full structure extending from a first upper extremity adjacent to the roof 1 to a second lower extremity situated above the supporting base 9. This means that the walls 2 make the enclosure opened at the bottom of the cylinders 18.

For example, the height opening at the bottom of the side walls 2 is comprised between 5cm and 20cm.

The side walls 2 are preferably made of mild steel metal sheet panel or any other appropriate material and may have a thickness between 0,5mm and 2.5mm and preferably about 1,6mm.

This fully closed structure at the side walls 2 avoids any direct impact of jet fire to any personnel in case of any leak from the cylinder valve manifold. The side walls 2 are opened at its bottom to provide proper air circulation through the enclosure and avoid any accumulation of gas in case of unforeseen leak in the installation. The opening height can be based on calculation for hydrogen leak dispersion for different scenarios and can be approximately about five to twenty centimeters in lateral dimension.

The roof 1 comprises a mesh like structure. For example, the roof is made of wire netting comprising openings each having dimensions between 0,002m² and 0,200m² and preferably between 0,005m² and 0,150m².

This roof structure prevents any object like a big stone from falling on the cylinder valve manifold situated underneath and is helpful in avoiding damage to any part of the cylinder valve manifold system which otherwise creates a leak on the system.

The mesh like structure (for example. 100 mm X 100 mm) at the top of pallet is also helpful in blocking possible burning fire crackers to have a direct impact with the cylinder valve manifold and avoids the dangerous situation in case of any gas leak.

The lower and upper parts of the pallet comprises each several openings 10 for receiving the tines of a fork truck or pallet loader/unloader. For example the upper openings are situated under the roof 1 and the lower openings are situated between the base supporting the cylinders and the lower extremity of the pallet lying on the soil.

The openings upper and lower openings 10 can be oriented in the sale direction (that is to say parallel to the same side walls 2).

The fork openings at the top of the pallet permit the lifting from the top by a tractor/forklift. This increases the stability during transportation of the pallet to and from the truck to the site by improving the point of center of gravity making it closer to the center of gravity of the forklift machine.

This provides an easy portability by the pay-loader machines (forklift /tractors).

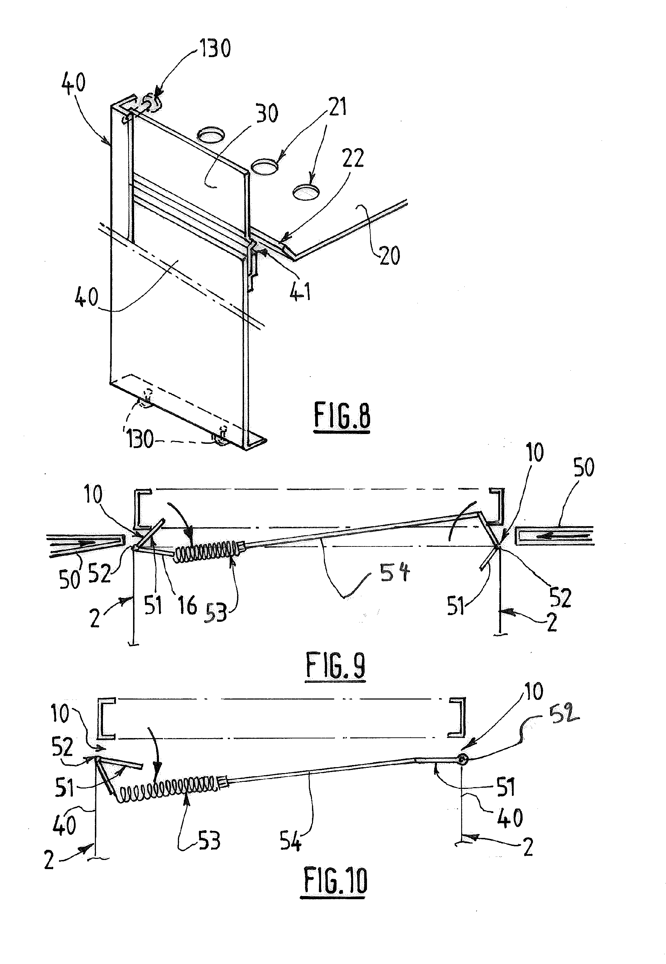

As shown in figures 9 and 10, the pallet might comprise mobile flaps 51 for selectively closing each upper opening 10 for receiving the tines 50 of a fork truck or pallet loader/unloader.

The flaps 51 might be installed at the top of the upper panels 30 by means of a hinge 52 and urged to a closing position (figure 9) via a spring 53.

Each flap 51 is articulated on a hinge 52 so that the entrance of the tines 50 of a fork truck or pallet loader/unloader into the openings 10 pushes the flaps 51 toward their open position against the return organ 53 effort. The flaps 51 rotate downwardly.

The opposite opening (on the opposite face of the pallet) might also comprise a flap 51. The two opposite flaps 51 are hinged and mechanically linked via a connecting rod 54 so that the opening on one side forces the opening o the other side (see figure 10).

When the forklift goes out of the opening 10, the spring 53 pushes back the two flaps 51 into the closed position in the reversed sequence.

In addition, the pallet comprises a common tap 4 connected to a conduit 14 selectively connected to the cylinders 18. One of the side walls 2 comprises an aperture 3 giving access to the common tap 4.

This cut out aperture 3 (for example having dimensions between 150 and 200 mm) is on a front wall 2 and provides hand access for the valve opening-closing and its maintenance. The aperture 3 is preferably covered during operation. This structure provides a protection from human/physical approach to access the cylinder manifold assembly and also provide a secured connection between the pallet and gas distribution at site.

Preferably, all the dimensions of the pallet are based on cylinder 18 manufacturer dimensions, valve and manifold dimension and the overall arrangement of all equipments and its parts in the structural frame.

Preferably, the pallet comprises also connecting points 8 for hooks 88 selectively attachable to distinct base for providing a locking arrangement in case of its sudden unloading from the site by the tractor when the pallet are in operation to supply gas to a receiver (for example a fuel cell system).

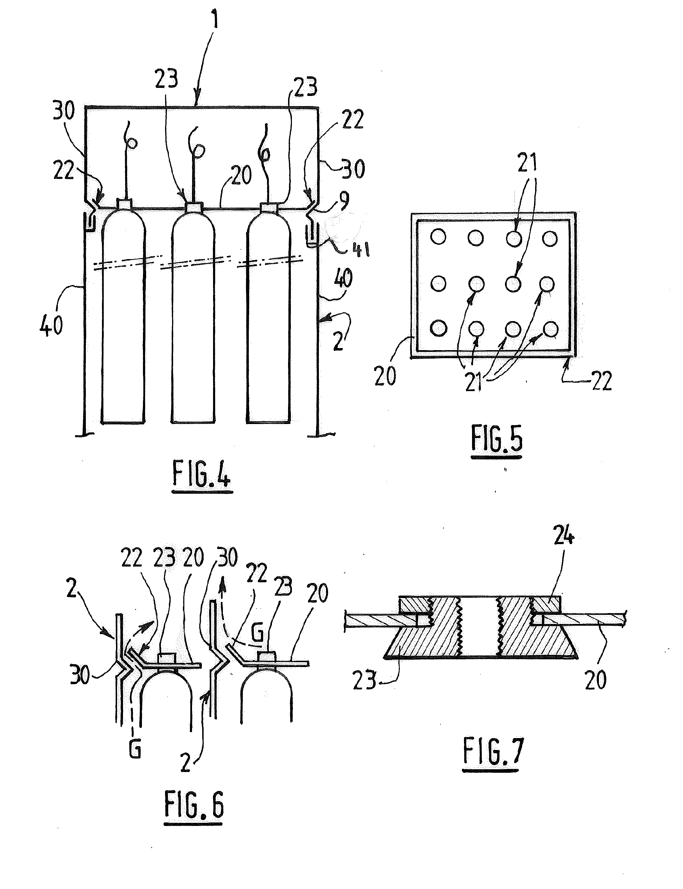

As illustrated in figures 5 to 6, the pallet includes preferably a separating plate 20 situated inside the enclosure. The separating plate 20 is perpendicular to the side walls 2 and comprises several holes 21 for receiving respectively the upper part of the cylinders 18. Preferably, the necks 23 of cylinders are fastened into the respective holes 21 of the separating plate 1. As shown in figure 7, each neck 23 of cylinders might be fastened into the respective hole 21 by means a threaded nut 24. In addition, a space is provided between at least part of the peripheral edge 22 of the separating plate 20 and the walls 2. In this manner the separating plate 20 prevents an upper gas leak to mitigate downward in the enclosure. At the same time, the separating plate 20 permits to release a gas leak at the bottom to the top via the space between the separating plate 20 and the walls 2. This might be even improved by providing that the peripheral edge 22 of the separating plate 20 is curved or bent upwardly as shown in figures 4 and 6. In addition, the surface of the walls 2 facing the peripheral edge 22 of the separating plate 1 might be also curved or bent so that it cooperates with the peripheral edge 22 of the separating plate 20 for defining a guiding divergent path for the gas from the bottom to the top. That is to say the gas path forces the gas G coming from the bottom and central area of the enclosure to flow toward the walls 2. The same architecture prevents an upper gas leak to flow downwards. This is illustrated in figure 6, the flows of gas leaks being represented with dotted arrows.

For example, the separating plate 20 is slipped on the upper extremity of the cylinders by means of the holes 21. For example, the cylinders 18 are kept separate from each other with a distance between zero and one cm.

This function of plate 20 is particularly profitable when cylinders 18 are of composite type, for preventing a contact between the cylinders.

As illustrated in figures 4 and 8, the side walls 2 might be made of two separate panels 40, 30, for example an upper panel 30 and a lower panel 40.

The pallet preferably comprises a frame skeleton structure made of bars 40.

The upper panels 30 might be secured to the bar 40 by means of attaching organs 130 such as threaded bolts screwed into threaded holes the bars 40.

As shown on figures 4 and 8, the bottom edge of upper panels 30 are preferably received into supporting slits 41 located at upper edge of respective bottom panels 40 (for example the supporting slit is a kind of bayonet structure welded .on the lower plate 40). The lower panels 40 might also be secured to the bars frame by means of threaded bolts 130 screwed into threaded holes the bars.

When designing a new chassis for the cylinders to make a bundle, the roof plate 1 may be also used as a structural element to fasten the cylinders into the chassis.

This pallet structure can be made standard and features several advantages.

The structure offers a system which have a less chance of leak due to valve failure and assembly failure at the connection points by providing only a single valve assembly to take the pack offline and inline. The pallet provides a faster deployment to the site operation with a single valve assembly instead of large number of valves in the existing systems.

The standardization of the pallet is helpful in achieving in rapid deployment of fuel cells to replace Diesel generators at telecom sites by bringing standard supporting frames to support their weights into the site.

This also helps in selecting a standard pay-loader machine (forklift / tractor) and thereby reducing the operating fuel cost and easy manoeuvrability to the operator. The standardization of the pallets is helpful in analyzing and monitoring the site consumption data which yields to effective utilization of the gas and reduction in operating cost of pallet change over at site.

The new pallet doesn't require any additional installation nor extended safety area and therefore it reduces significantly the overall footprint of the installation.

The new pallet allows varying easily the quantity of H2 stored on site to fit with the customer requirements.

This helps also to reduce the inventories as compared to non-uniform pallets.

The invention serves the ultimate objective for any big project for rapid deployment of large number of sites within a stipulated short period of time by providing safe and standardized solution in addition to abiding with the local rules and regulations. It also brings a competitive advantage to the fuel cell technology by reducing significantly the footprint of the installation and by enhancing the safety.

## Claims

1. A pallet for transporting a group of pressurized gas cylinders (18) comprising a supporting base (9), four side walls (2) and a roof (1) defining an enclosure around the cylinders (18), **characterized in that** each wall (2) comprises an full structure extending from a first upper extremity adjacent to the roof (1) to a second lower extremity situated above the supporting base (9) so that the enclosure is opened at the bottom of the cylinders (18), the roof (1) comprising a mesh like structure, the pallet comprising a common tap (4) connected to a conduit (14) selectively connected to the cylinders (18), one of the side walls (2) comprising an aperture (3) giving access to the common tap (4), the supporting base (9) and the upper part of the pallet situated underneath the roof (1) comprising each several openings (10) for receiving the tines of a fork truck or pallet loader/unloader.

2. Pallet according to claim 1, **characterized in that** it comprises at least an attaching organ (88) such as a hook, selectively attachable to attaching part (8) of the pallet for selectively locking the pallet to a distinct support frame and preventing the unloading of the pallet when it is in operation.

3. Pallet according to claim 1 or 2, **characterized in that** the roof (1) is made of wire netting comprising openings having each dimensions between 0,002m² and 0,200m² and preferably between 0,005m² and 0,150m².

4. Pallet according to any of claims 1 to 3, **characterized in that** at least part the side walls (2) are made of metal sheet panel having a thickness between 0,5mm and 2.5mm.

5. Pallet according to any of claims 1 to 4, **characterized in that** the height opening at the bottom of the side walls (2) is comprised between 5cm and 20cm.

6. Pallet according to any of claims 1 to 5, **characterized in that** the aperture (3) has a surface comprised between 0, 01 m² and 0,05m².

7. Pallet according to any of claims 1 to 6, **characterized in that** it comprises a lifting ring (11) located at the top of the pallet.

8. Pallet according to any of claims 1 to 7, **characterized in that** it encloses between six to eighteen gas cylinders (18).

9. Pallet according to any of the claims 1 to 8, **characterized in that** it comprises a separating plate (20) situated inside the enclosure, the separating plate (20) comprising several holes (21) for receiving respectively the upper part of the cylinders (18), a space being provided between at least part of the peripheral edge (22) of the separating plate (20) and the walls (2) so that the separating plate (20) preventing an upper gas leak to mitigate downward in the enclosure and permitting a gas leak at the bottom escaping to the top via the space between the separating plate (1) and the walls (2).

10. Pallet according to claim 9, **characterized in that** the separating plate (20) is perpendicular to the walls (2) and at least part of the peripheral edge (22) of the separating plate (20) is curved or bent upwardly.
